# EUROPEAN PATENT APPLICATION

(11) **EP 3 653 310 A1**
(43) Date of publication of application: **20.05.2020**
(21) Application number: 18382801.1
(22) Date of filing: 14.11.2018
(51) Int. Cl.: B09B 3/00, C05F 7/00, C05F 9/04, C02F 11/12, C02F 11/121, C04B 18/04, C04B 18/16, A01G 24/00, C04B 33/132, C04B 18/18, C04B 18/20, C02F 9/00, B09B 1/00, C05D 3/02, E21C 41/32

(54) **MIXTURE FOR USE AS ARTIFICIAL SOIL COMPRISING STONE AND/OR CERAMIC MACHINING SLUDGES, METHOD FOR PREPARATION AND USES THEREOF**

(71) Applicant: Cosentino Research & Development, S.L., 04850 Cantoria, Almeria (ES)
(72) Inventor: ARZADUN LARRUCEA, Amaia, E-04850 Cantoria - Almería (ES); LUNA RAMOS, Lourdes, E-04120 Almería (ES); SOLÉ BENET, Alberto, E-04120 Almería (ES); LÁZARO SUAU, Roberto, E-04120 Almería (ES)
(74) Representative: ABG Intellectual Property Law, S.L.

(57) **Abstract**

The present invention relates to mixtures suitable as artificial soils, comprising stone or ceramic machining waste sludges, gravel of particles, organic matter and optionally a cation exchanger. The invention also concerns the method for obtaining said mixtures suitable as artificial soils and their use in rehabilitation and filling of degraded areas such as landfills, natural or artificial parks, mines, pits and agricultural fields, with particular interest as fertile substrates for plant growth.

## Description

### FIELD OF THE INVENTION

The present invention relates generally to the field of artificial soils, the method for obtaining said artificial soils and their use in rehabilitation of degraded areas such as landfills, natural or artificial parks, mines, pits and agricultural fields, with particular interest as substrates for plant growth. The invention is also concerned with the use of wastes from the industrial manufacture of stone and ceramic articles, and particularly with the wastes in the form of machining sludges or scraps.

### BACKGROUND

In today's society, landscape and soil are continually altered by agriculture, industry, infrastructures and mining activities.

In arid and semi-arid zones, degradation processes can lead to irreversible conditions such as desertification, if no actions are taken to recover the functionality of the ecosystem. The costs of ecological rehabilitation can be considerable, but the cost of not acting can be much greater in terms of damage to the ecosystem and loss of quality and well-being of the population. Many authors have suggested that the first step to accelerate the ecological rehabilitation of these areas is the creation of a fertile soil with the physical, chemical and biological characteristics necessary to support the establishment of the vegetation (Heneghan et al., Restor. Ecol., 2008, 16: 608-617).

On the other hand, the growing waste-generation of today's society is a problem that demands an immediate solution. The incorporation of waste to rehabilitation substrates has been considered as a solution to recycle waste materials and at the same time improve the edaphic conditions that facilitate the development of the vegetation. However, it must be taken into account that depending on the waste, its incorporation in substrates can also introduce a series of contaminants and restrictions since heavy metals, organic pollutants or increases in soil salinity can prove fatal to the sought application. Therefore, the viability of these materials as substrates in restoring degraded areas is subject to important limitations.

Inorganic materials of mineral origin provide scaffolding structure to soils and are responsible for some of its properties. The size distribution of the grains for example, plays an important role in the density and permeability of the soil.

Soils (or substrates) dominated or strongly influenced by human-made materials are considered by specialists in Soil Classification as a new group called Technosols, which comprise a Reference Soil Group created in 2006 (IUSS Working Group WRB. 2014. World Reference Base for Soil Resources. World Soil Resources Reports No. 106. FAO, Rome).

Technosols combine soils whose properties and pedogenesis are dominated by their technical origin. They contain a significant amount of artefacts (something in the soil recognizably made or strongly altered by humans or extracted from greater depths) or are sealed by technic hard material (hard material created by humans, having properties unlike natural rock) or contain a geomembrane. They include soils from wastes (landfills, sludge, cinders, mine spoils and ashes), pavements with their underlying unconsolidated materials, soils with geomembranes and constructed soils. Thus, Technosols comprise all kinds of materials made or exposed by human activity that otherwise would not occur at the Earth's surface and are often referred to as Urban or Mine soils. Technosols are found throughout the world where human activity has led to the construction of artificial soil, sealing of natural soil, or extraction of material normally not affected by surface processes. Thus, cities, roads, mines, refuse dumps, oil spills, coal fly ash deposits and the like are included in Technosols.

During the production of ceramics and natural or artificial stones, particularly in the case of boards or slabs, processes of machining are performed to cut, gauge and polish or brush the piece being produced to the required dimensions, and to obtain the desired finishing appearance of its surface. These machining processes are usually carried out in wet conditions, with the introduction of significant amounts of water, to cool and lubricate the machining tools, and to avoid the formation of dust in the environment. The machining water is collected and reintroduced into the system, after separating (e.g. by decantation) the solid material in suspension coming from the machining of the stone or ceramic materials. The separated solid material is known as sludge, due to its appearance of fine humid powder, caused by its small particle size and its high water content.

The decanted sludge composition is dominated by minerals in particle form, accompanied, depending on the stone or ceramic material being mechanized, by lower amounts of resin (used as binder or coating) and abrasive particles, such as diamond (from the mechanizing tools employed). Further usual components, although in a lesser extent, include additives such as dyes. In some cases, the sludge also contains a small portion of the fibrous remains of the paper used as a protective sheet during the compaction and curing of the agglomerated artificial stones.

In most cases, these sludges are discarded in landfills, which presents an environmental problem. A rough estimate has been made that some 345,000 tons of sludge are produced annually in Europe, considering only those from the agglomerated artificial stones industry.

Application WO 2007/104368 A1 discloses a method for treating the sludge produced in stone cutting and polishing processes consisting in submitting the sludge to a high temperature drying treatment.

Application WO 2009/033943 A1 discloses a calcination process for treating sludges resulting from the machining of agglomerated stone materials which aims at re-using the solid waste comprised in the sludges as filler in the manufacture of Bretonstone® materials.

International PCT Application WO 2010/103445 A1 discloses a method for treating and using sludges from the machining of slabs or blocks of stone, ceramic or agglomerated stone material, comprising the steps of drying and heating to 400-600 °C, so that organic substances are incinerated.

These methods for treating sludges resulting from the machining of agglomerated stone materials require a calcination energy-demanding step, rendering them undesirable from the point of view of the environment.

Patent application KR 20140142601 A solves the problem of treating sludges from the machining of slabs or blocks of stone materials by adding the sludges to cementitious waste materials thus producing a more environmentally friendly waste material, which is however anyway landfilled.

Despite the solutions disclosed in the citations above, there is still a need in the art to provide uses for materials comprising sludge waste resulting from machining of stone materials, which are commercially viable and more environmentally friendly.

### SUMMARY OF THE INVENTION

The inventors have surprisingly found that sludge wastes deriving from the machining of stone and ceramic materials can be transformed into mixtures that can be used as a fertile artificial soil, with no toxic leachates or erosion by surface runoff of rain-water. The present invention thus provides a method of using sludge wastes resulting from the machining of stone or ceramic materials in order to provide mixtures that may find application as fertile technosols for restoration of soils damaged from human-related activities, especially in arid and semi-arid zones, as well as solid fillers in quarries, mines, or municipal landfills.

Accordingly, in a first aspect, the invention is directed to a mixture suitable as artificial soil, comprising:
a) sludge resulting from stone or ceramic material processing;
b) gravel of particles with an average particle size between 1 and 70 mm, preferably made of stone (either natural or artificial) or ceramic;
c) organic matter; and
d) optionally, a cation exchanger.

In a second aspect, the invention is directed to a method for preparing the mixture of the invention for use as artificial soil, which comprises mixing the components (a), (b) and (c) as defined in the first aspect, and optionally (d) and/or water.

In a third aspect, the invention concerns the use of the mixture of the invention as artificial fertile soil, for instance in the rehabilitation of degraded natural soils, desertic or sub-desertic areas, landfills, natural or artificial parks, mines, pits, agricultural fields and as substrate for plant growth.

In a fourth aspect, the invention is directed to the use of sludge resulting from stone or ceramic material processing in the preparation of a mixture suitable as artificial fertile soil.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
Figure 1: Aggregate visual inspection upon submitting samples to water immersion (Emerson water dispersion test).
Figure 2: Water stability test of samples 1-12 (Emerson water dispersion test).
Figure 3: Plasticity Index (PI) of samples 1-12.
Figure 4: Permeability of samples 1-12.
Figure 5: Particle size distribution of samples 25-36.
Figure 6: Permeability of samples 25-36, before irrigation (a) and after irrigation (b).
Figure 7: Surface run-off water from samples 25, 29 and 33 after simulated rain, as a function of time.
Figure 8: Surface run-off coefficient and erosion determined from simulated rain on samples 25, 29 and 33.
Figure 9: Number of germinated seeds in samples 25-36.

### DETAILED DESCRIPTION OF THE INVENTION

### Definitions

Unless defined otherwise, all technical and scientific terms used herein have the same meaning as commonly understood to one of ordinary skill in the art to which this disclosure belongs.

The mixtures of the present invention can be considered as artificial soil or a technosol, which are substrates dominated or strongly influenced by human-made materials and, in the context of the present invention, are mainly comprised of stone or ceramic waste materials.

Natural stones are a group of different types of rocks of natural origin extracted from quarries, which are processed and commercialized for construction and decoration applications. Natural stones typically include granite, marble, slate, travertine, sandstone, limestone, quartzite, among many others.

The material "artificial stone" is synonym to "engineered stone", and includes agglomerated artificial stones, as those exemplified by the products sold under the tradename Silestone® of the Spanish company Cosentino S.A.U. Agglomerated stones falling in the scope of the present invention are generally those defined in the standard UNE-EN 14618:2011.

Agglomerated artificial stones are based on stone or stone-like particles of varied sizes, such as quartz, mixed with a hardened binder (organic or inorganic). These materials are well-known and extensively used as construction and decoration surfaces for kitchen and bath countertops, flooring and wall siding, among others. In detail, the materials are normally made up of inorganic mineral fillers (85-95% w/w), including, but not limited to, silica sands, quartz (as such or as cristobalite), feldspar, ceramic, glass and others, cured polyester resin (5-15% w/w), pigments and additives (<5% w/w). To achieve the high degrees of hardness required, the contents of crystalline silica are normally from 70% - 90% w/w.

Ceramic materials, in the scope of the present invention, follows the general understanding of this type of materials used for construction and decorative purposes, resulting from the pressing and firing of clay with other components such as feldspars, sands, kaolin, talc, and others. Particular examples of ceramic materials according to the invention are those hard, low-porosity ceramics used as construction or decoration tiles or slabs, such as porcelain and stoneware ceramics.

Dekton® is the registered tradename of Cosentino S.A.U. for a type of ceramic material that results from the sinterization at temperatures up to 1300 °C of aluminosilicates (clays, feldspars, kaolin), silica (crystalline and amorphous), and optionally zircon, together with inorganic pigments. The material Dekton® finds similar construction applications as those of Silestone®, together with additional applications thanks to its resistance to heat and weathering (e.g. façade cladding, outdoor flooring). After sintering, a predominant glassy mineral phase is formed, where crystalline quartz, and other crystalline mineral phases are embedded. The content of crystalline silica (SiO₂) in Dekton® is less than 11% w/w. Materials of this type are described in the patent application EP2889437A1.

The term "calcination" refers to a heating process so that the organic matter is decomposed into smaller, volatile molecules. In this way, a calcination step is to be interpreted as a step of heating a material to a temperature of at least 400 °C. The terms "porcelain" or "porcelain ceramics" mean generally a ceramic material including clay and kaolin, made by heating to temperatures of between 1200 °C and 1400 °C.

Through this description and its claims, wherever the term sludge is used, it is referred to the solid residue remaining from drying or concentration of the water suspension of dust(particles) produced during wet machining of the stones or ceramics. This dry residue might still contain some level of humidity (up to 20% w/w), but it might not have the muddy consistency of the initial dispersion and will be formed by particle aggregates of different size together with unbonded small particles.

The term "w/w" or "% by weight", unless stated otherwise, refers to the weight ratio between a component and the total weight of the mixture it composes.

The "organic matter" defined as an essential component of the mixture of the invention is not limited, composted or not, and it can be for example embodied by the organic matter normally found in plant residue waste from agricultural exploitations (intensive cultivation, green-house agriculture, etc.).

The term "average particle size" refers to the D50 value of the particle size distribution at which 50% by volume of the particles have a diameter (or largest dimension) smaller than said value and 50% by volume of the particles have a diameter (or largest dimension) larger than said value.

The term "fertile soil" generally refers to soil suitable for plant growth.

### Mixtures suitable as artificial soil

The inventors have surprisingly found that a very high amount of this sludge, preferably more than 40% w/w and up to 85% w/w of the total weight (based on dry weight), can be incorporated into the mixture usable as fertile artificial soil. Thus, the present invention provides a long needed and very useful method to recycle this waste material, giving rise to an inexpensive and simple process for the preparation of artificial soil.

Accordingly, in a first aspect, the invention is directed to a mixture suitable as artificial soil comprising:
a) sludge resulting from stone (either natural or artificial) or ceramic material processing;
b) gravel of particles with an average particle size between 1 and 70 mm, preferably made of inorganic material such as stone (either natural or artificial) or ceramic;
c) organic matter; and
d) optionally, a cation exchanger.

In a preferred embodiment, the mixture suitable as artificial soil comprises at least 30 % w/w of sludge, more preferably at least 40 % w/w, and at most 90 % w/w of the total weight sum of a), b), c) and d) (based on dry weight, i.e. excluding any water they might contain). In certain realizations, the mixture may comprise 30-90 % w/w of sludge, or 40-85 % w/w of sludge based on dry weight.

The gravel may be comprised in the mixture in an amount of at least 5 % w/w, or from 5 - 45 % w/w of the total weight sum of a), b), c) and d) (based on dry weight, i.e. excluding any water they might contain), preferably from 5 - 30 % w/w.

The organic matter is comprised in the mixture in an amount of at least 2% w/w of the total weight sum of a), b), c) and d) (based on dry weight, i.e. excluding any water they might contain), and preferably at most 45% w/w. Suitably, the organic matter might be contained in the mixture in a range 5 - 30 % w/w of the total weight sum of a), b), c) and d) (excluding any water they might contain).

In specific embodiments, the mixture also comprises a cation exchanger. Preferably, the cation exchanger makes up at least 0.5 % w/w, or from 0.5 to 10 % w/w, preferably from 1 to 10 % w/w, and more preferably from 2 to 8 % w/w of the total weight sum of a), b), c) and d) (excluding any water they might contain).

In a preferred embodiment, the mixture suitable as artificial soil comprises:
a) 30-90 % w/w of sludge resulting from (natural or artificial) stone or ceramic material processing;
b) 5-45 % w/w of gravel of particles with an average particle size between 1 and 70 mm;
c) 2-45 % w/w of organic matter; and
d) 0.5-10 % w/w of a cation exchanger
wherein the w/w percentage refers to the dry weight (i.e. excluding water content) of each component with respect to the total dry weight sum (i.e. excluding water) of a), b), c) and d), so that the sum of the dry weights of each of these components equals 100%.

In another embodiment, the mixture suitable as artificial soil comprises:
a) 40-85 % w/w of sludge resulting from (natural or artificial) stone or ceramic material processing;
b) 5-30 % w/w of gravel of particles with an average particle size between 1 and 70 mm;
c) 5-30 % w/w of organic matter; and
d) 2-8 % w/w of a cation exchanger,
wherein the w/w percentage refers to the dry weight (i.e. excluding water content) of each component with respect to the total dry weight sum (i.e. excluding water) of a), b), c) and d), so that the sum of the dry weights of each of these components equals 100%.

In an embodiment, the mixture of the invention comprises at least 50% by weight of a)+b)+c)+d) (if present) measured as dry weight with respect to total weight of the mixture. Preferably, at least 60% by weight. More preferably, at least 70% by weight. In a preferred embodiment, the mixture of the invention comprises 50-90% of the weight of the sum of a), b), c) and d) (if present) measured as dry weight with respect to total weight of the mixture. Preferably, 50-80% by weight. More preferably, 60-80% by weight.

The dry weights or humidity of the components in the mixture is calculated by weight difference, before and after drying a representative sample of the component in a convection oven at 105°C for 24h.

In an embodiment, the mixture of the invention comprises at least 10% by weight of water with respect to the total weight of the mixture. Preferably, at least 20% by weight. More preferably, at least 30% by weight. In a preferred embodiment, the mixture of the invention comprises 10-50% by weight of water with respect to total weight of the mixture. Preferably, 10-40% by weight. More preferably, 20-30 by weight. It needs to be understood that the water content of the mixture when prepared may change during use as artificial soil, as consequence of evaporation and/or water absorption by the soil.

The water in the mixture of the invention might include both added water and water coming from the raw materials. In a particular embodiment, the mixture of the invention further comprises from 10 to 30% by weight of added water in relation to the sum of the dry weight of the sum of a), b), c) and d), to favor the formation of aggregates during mixing of the components. More preferable, between 15 and 25% by weight of added water.

In certain embodiments, the mixture consists of components a), b), c) and d), and water. That is, in these embodiments, the mixture is essentially free from other components different than a), b), c), d) and water.

In a particular embodiment, the mixture suitable as artificial soil of the invention can include further components, such as rubble materials, cement granulates, wood fragments, paper, polymeric particles, fragments of bricks, coloring agents, mineral wool or fibers, microorganisms, pesticides, water or other typical components present in commonly used plant substrates.

In an embodiment, the mixture suitable as artificial soil of the invention has a pH of at most 11.0, or between 7.0 and 10, preferably between 8.0 and 10.0. This pH might result directly from the mixture of components, or it might be adjusted by using known pH regulators which are compatible with the components and with the intended application. The pH referred to in this paragraph relates to the pH measured when 1 part of the mixture is put to 2.5 parts of water. During use of the mixture, the pH might vary, for example, it might get closer to neutral pH, as consequence of the dilution and extraction of salts by percolated water.

In an embodiment, the mixture suitable as artificial soil of the invention has an organic carbon content between 2 and 20% w/w, preferably between 3 and 10% w/w with respect to the total dry weight of the mixture.

In a particular embodiment, the mixture suitable as artificial soil of the invention falls in the soil typology silt-loam. In preferred embodiments, the mixture has a texture class with a silt component of ≥ 40%, preferably ≥ 50%, in relation to the dry weight of the mixture, the rest being the other two texture class components sand and clay. More preferably, the silt component ranges from 40-75%, the sand component from 15-35%, and the clay component from 5-25%, in all cases in relation to the dry weight of the mixture, wherein the sum of the three silt, sand and clay components is 100%.

In this regard, in the present document, clay refers to particle size of less than 0.002 mm, silt refers to particle size between 0.002 and 0.05 mm, and sand refers to particle size between 0.05 and 2 mm, as measured by the Robison pipette method.

In additional embodiments, the mixture suitable as artificial soil of the invention has an electrical conductivity of at most 5 dS/m, preferably of at most 3 dS/m. This electrical conductivity is measured from the extracted eluent after homogeneously contacting 1 part of mixture with 5 parts of water. During use of the mixture, the electrical conductivity might vary as consequence of the dilution and extraction of salts by percolated water. This range of electric conductivity is necessary to avoid generating toxic conditions for plants, and to favor fertility of the artificial soil.

The mixture suitable as artificial soil of the invention may have an apparent density in dry state of 0.50 - 1.20 g/cm³, preferably from 0.60 - 1.00 g/cm³ or from 0.65 - 0.90 g/cm³. This apparent density is measured in the mixture as prepared, and it might vary later on, during use, due to natural self-compaction of the soil.

### Sludge from stone or ceramic processing

The mixture of the invention, suitable as artificial soil, comprises materials produced as sludge waste from the wet (i.e. with water input) processing or machining of stone (either natural or artificial) or ceramics, processing such as cutting, gauging, grinding, polishing, brushing, etc.

In an embodiment, the stone or ceramic material in the sludge a) is selected from the group consisting of natural stone, artificial stone, ceramic materials, porcelain, stoneware and combinations thereof. Preferably, it is selected from the group consisting of artificial stone, ceramic materials and mixtures thereof. More preferably, it is selected from the group consisting of agglomerated artificial stone, porcelain ceramic materials and mixtures thereof.

A non-limiting example of sludge waste would be that resulting from the wet machining of agglomerate artificial stone, in particular of quartz agglomerate materials, such as Silestone®.

In another embodiment, the sludge waste may be that resulting from wet machining of hard low-porosity (clay-based) ceramic materials, in particular porcelain ceramic and/or stoneware materials. The sludge waste may also be resulting from wet machining of Dekton® materials. In a further embodiment, the sludge waste may be produced during the wet machining of natural stones, such as granite, marble, slate, quartzite, travertine, limestone or sandstone. In certain embodiments, the mixture of the invention comprises sludges from wet machining of several different materials, and preferably include sludges from mechanizing stone agglomerate artificial stone and sludges from wet mechanizing ceramic materials.

The sludge waste resulting from the wet machining of agglomerated artificial stone may comprise predominantly stone, or stone-like, dust particles, such as quartz (crystalline silica), marble or feldspar, and in lower proportion polymeric resins such as hardened organic resins, abrasive particles from the machining tools, coloring agents and in some cases also paper fragments or fibers.

Typical organic resins include polymeric resins such as polyester resins, acrylic resins, epoxy resins and vinyl resins.

In the other hand, the sludge waste from the wet machining of ceramic products will be mainly inorganic in nature, comprising primarily sintered aluminosilicates and small amounts of inorganic pigments, together with the abrasive particles from the machining tools.

In the case of sludge waste from wet machining of natural stone, the sludges will comprise mainly particles of the mineral being processed, granite, marble, etc., and the abrasive particles from the machining tools.

The sludge is separated from the process water suspension of particles obtained during machining the stone or ceramic articles by decantation or filtration. After this first separation step, the water content of the sludge is reduced to less than 40% w/w, more preferably to less than 30% w/w, before it is added to the mixture of the invention. This might be achieved by drying in a heated oven (continuous or discontinuous), or by allowing the water to evaporate by air drying, e.g. outdoors. In a more preferred embodiment, the sludge according to the invention is not dried in a step of calcination, preferably not dried in an artificial heating step, or in an artificial heating step at a temperature > 400 °C, or even at a temperature > 300 °C.

In a particular embodiment, the sludge comprises 10-30% by weight of water with respect to the total weight of the sludge; preferably 15-30%; more preferably 15-25%.

In a particular embodiment, the sludge comprises:
- water,
- ceramic and/or stone particles, and
- optionally cured organic resin if the sludge comes at least in part from agglomerated artificial stone.

In a preferred embodiment, the sludge comprises:
- 10-30% by weight of water,
- 60-90% by weight of ceramic and/or stone particles, and
- optionally 1-15% by weight of cured organic resin if the sludge comes at least in part from agglomerated artificial stone.

Additionally, the sludge can comprise low amounts (preferably <5% by weight, more preferably 0.01-5% by weight) of additives, such as pigments, and/or < 8% by weight of paper fibers from the protective layers used during compacting/curing, and/or low amounts (preferably <3% by weight) of abrasive particles from the machining tools, such as diamond.

Preferably, the stone and/or ceramic materials in the sludge comprises inorganic minerals such as quartz, silica, and aluminosilicates (e.g. feldspar, clays, kaolin). More preferably, the stone and/or ceramic materials in the sludge comprises 40-80% by weight of SiO₂.

In general, the sludge obtained after drying is formed by aggregates of particles of different size (up to several cm, preferably between 0.5 and 5 cm), hardness and consistency, together with some free fine powder of individual particles. If the aggregates are too large, they may be crushed or crumbled down to facilitate their mixture with the rest of the components.

The average size of the individual particles (free or forming aggregates) in the sludge is preferably smaller than 1 mm, or smaller than 0.9 mm and also larger than 0.001mm.

In an embodiment of the invention, the sludge resulting from stone or ceramic material processing comprises:
- 10-30% by weight of water,
- 60-90% by weight of ceramic and/or stone particles,
- 2-15% by weight of cured organic resin, and
- optionally, <8% of paper fibers,
- optionally, <5% by weight of additives, such as pigments,
- optionally, <3% by weight of abrasive particles from the machining tools, such as diamond,
wherein the average size of ceramic and/or stone particles in the sludge is 0.001-1 mm.

The elemental inorganic chemical composition of the sludges, according to preferred realizations of the invention, comprises SiO₂ in an amount of at least 40% w/w, and preferably also at most 80% w/w.

Preferably, the sludge waste has a pH range between 6.0 and 7.0.

In a particular embodiment, the sludge, as such, falls in the soil typology silt-loam. In preferred embodiments, the sludge has a texture class with the following component ranges (by weight):
- 5-25% sand,
- 50-90% silt, and
- 5-20% clay.

Preferably, the sludge waste of the invention has a texture class with the following component ranges:
- 10-20% sand,
- 60-80% silt, and
- 10-20% clay.

In a particularly preferred embodiment, sludge waste (a) is produced in the polishing of stone and/or ceramic materials such as Silestone® and/or Dekton®, and comprises a mixture of quartz and aluminosilicates.

### Gravel of particles with an average particle size between 1 and 70 mm

In an embodiment, the component (b) of the mixture suitable as artificial soil of the invention is formed by gravel particles with an average particle size between 1 and 70 mm. The gravel particles are preferably natural stone, artificial stone or ceramic particles.

Preferably, the gravel particles, e.g. of natural stone, artificial stone or ceramic, in component (b) have an average particle size between 2 and 65 mm. More preferably, they are gravel particles with an average particle size between 2 and 50 mm.

The gravel particles are suitably of irregular or regular shape. The average particle size is understood as the larger diameter or dimension (in the case of non-round particles) of the particles.

The gravel particles might be of any material which is sufficiently inert and stable, meaning that it is compatible with the other components of the mixture, it does not cause environment pollution, it is not significantly modified during its use, and it does not dissolve or disperse in contact with rain water. Stone particles or ceramic particles are found particularly useful, since they are readily available and fulfill all these criteria. Other less preferred alternatives may be gravel of polymeric particles (plastic, resin), or fragments of wood. The skilled in the art would have no problem finding other alternative materials for the gravel particles, without departing from the scope of the invention.

It is particularly interesting from the environmental point of view, when the gravel particles are made from recycled or reused materials. In a preferred embodiment, the mixture suitable as artificial soil of the invention comprises gravel of particles of natural stone, agglomerated artificial stone, ceramic or mixtures thereof as component (b). In this case, the gravel particles might be obtained by grinding the rejects and scrap from trimming in the manufacture of stone and ceramic articles. In this way, two different waste products from the same industry can be valorized as artificial soil, on one hand the sludges from gauging, polishing, etc., and on the other the scraps and trimmings from cutting to size.

In a particular embodiment, the particles in component b) made of natural stone, agglomerated artificial stone and/or ceramic comprise inorganic minerals such as quartz, silica, and aluminosilicates (e.g. feldspar, clays, kaolin) and optionally (preferably 2-15% by weight) cured organic resin if the particles come from agglomerated artificial stone.

In a most preferred embodiment, the mixture suitable as artificial soil of the invention comprises (based on dry weight and with respect to the total dry weight of a)+b)+c)+d)) 40-85 % w/w of sludge of agglomerated artificial stone and/or ceramic material, as component (a) and 5-45 % w/w of gravel of particles of agglomerated artificial stone and/or ceramic material, as component (b), the remaining until 100% w/w being made by components (c) and (d), that is, the organic matter and the cation exchanger.

The gravel of particles in component (b) were found as resulting advantageous in the use of the mixture of the invention as artificial soil. They provide an inert scaffold support, favors water and air permeability through the mixture, and the inventors found out that they also play an important role in homogenizing the mixture of components that make the artificial soil during the mixing step. These gravel particles help achieving an end-product with improved characteristics, namely improved durability, permeability, aeration and homogeneity and they can be obtained, for example, from the rejects and trimming scrap of stone or ceramic slabs (such as Silestone® or Dekton®) and/or from construction rubble materials.

### Organic matter

Organic matter is necessary for the fertility of the mixture, when used as artificial soil, since it increases the humidity and nutrient retention capacities of the artificial soil and introduces necessary microorganisms that play an important symbiotic role with the vegetation that ideally develops in the artificial soil.

The use of organic matter produced as waste from agriculture activities (e.g. green-house extensive agriculture) allows increasing the value of what would otherwise be considered as mere waste. In addition, being seasonal activities, the agriculture waste is not produced throughout the whole year but rather in a short period of time corresponding to the end of the season. This creates a waste management problem. The present invention thus allows an additional valorization, or escape route, for the organic waste generated in green-houses or other intensive agricultural activities.

The organic matter can be composted or non-composted.

Preferably, the organic matter is compost organic matter, preferably compost organic waste. In a more preferred embodiment, the organic matter comprises plant waste or fruit or vegetal residues, preferably compost plant, fruit or vegetal waste. The compost organic matter can be obtained, for example, from green-house agriculture activities.

In a preferred embodiment, the organic matter of the artificial soil does not comprise plastic materials foreign to plant waste, or other substances that might be considered toxic for the development of vegetation or which could pollute the ground where the artificial soil is to be used (herbicides, heavy metals, etc.).

In an embodiment, the organic matter is selected from composted and non-composted vegetable, fruit and plant residues, including stems, leaves, roots, seeds, rinds, skins and any vegetable, fruit or plant part.

The organic matter comprises preferably particles with sizes smaller than 8 mm, to facilitate obtaining an homogeneous mixture with the other components. The humidity of the organic matter (composted or non-composted), i.e. of the plant waste, is preferably > 30 wt.%, or between 30-50 wt.%.

In certain embodiments, the organic matter is formed by a compost with a mixture of at least 20 parts of carbon for each part of nitrogen, or 25-35 parts of carbon for each part of nitrogen.

Preferably, for use in the intended application as artificial soil, the organic matter is selected having a good homogeneity and uniformity, an acceptable aspect, as well as a non-offensive odor, with a concentration of impurities and pollutants that makes it acceptable for agricultural use, as known in the art. In another aspect, the organic matter needs to be free or have an acceptable low level, or pathogenic microorganisms, such as salmonella or Escherichia Coli.

The organic matter may have a pH of between 7.0 and 9.0, preferably between 8.0 and 8.5.

The organic matter might have a significant content of soluble salts, as consequence of the pesticides and fertilizers used in the agricultural activities. This might result in an initially elevated electric conductivity of the mixture of the invention. However, this is not a critical shortcoming, since the excess of salts will tend to lixiviate to the percolated rain water during use as fertile artificial soil.

Other sources of organic matter are thinkable without departing from the scope of the invention. So, for example, organic matter generated in urban water treatment plants could be used.

### Cation exchanger

In the context of the present invention, a cation exchanger is considered as any compound suitable for weak interaction with cations, where a cation can easily be displaced from the surface of a cation exchanger by other cations from the surrounding solution. A cation exchanger is thus capable of retaining cations solvated in water, i.e., positively charged atoms or molecules found in a surrounding aqueous medium by releasing other cations.

The cation exchanger has an exchanging capacity, defined as the amount of positive charge that can be exchanged per mass of cation exchanger, which is higher than the exchanging capacity of the organic matter.

Examples of the material having cation exchange capability include cation exchange minerals, humus and cation exchange resins.

Preferably, the cation exchanger is a cation exchange mineral. Examples of cation exchange minerals include clay minerals, and in particular smectite minerals, such as montmorillonite, bentonite, beidellite, hectorite, saponite, stevensite, mical minerals, vermiculite and zeolite, among others. Clay minerals, having accessible negatively charged ions, function well retaining or absorbing cations from the aqueous surroundings. Furthermore, clay has an additional positive effect in the formation and stability of aggregates from the mixture during the mixing step.

In a particular embodiment, the cation exchanger is selected from smectite minerals. In a preferred embodiment, the cation exchanger is bentonite.

The cation exchanger may be used in the mixture for favoring that the exchange of cations of the mixture or artificial soil with the surrounding is enough, and that those cations necessary for the nutrition of the vegetation are sufficiently absorbed and retained by the soil, and that they are not excessively washed out to deeper layers of the ground.

In a particular embodiment, the cation exchanger according to the invention has a texture class with the following component ranges (by weight):
- 20-40% sand,
- 5-20% silt, and
- 30-70% clay.

Preferably, the cation exchanger according to the invention has a texture class with the following component ranges:
- 25-40% sand,
- 10-15% silt, and
- 40-60% clay.

### Method of producing the mixture suitable as artificial soil of the invention

In a second aspect, the invention is directed to a method of producing the mixture suitable as artificial soil of the invention, which comprises:
- combining the following substances until obtaining a mixture:
   a) sludge resulting from stone (either natural or artificial) or ceramic material processing;
   b) gravel of particles with an average particle size between 1 and 70 mm, preferably made of inorganic material such as stone (either natural or artificial) or ceramic;
   c) organic matter;
   d) optionally a cation exchanger, and
   e) optionally water.

Particular and preferred embodiments for the mixture suitable as artificial soil and for components (a)-(d) are as defined above.

In a preferred embodiment, the water is added in an amount of from 5 to 30 % of sum of the dry weight of each component a), b), c) and d); more preferably from 10 to 30 %, even more preferably from 15 to 25% of water, to favor the formation of aggregates during mixing of the components.

In a particular embodiment, the components can be combined by hand or in a blending machine or mixer. In a preferred embodiment, the components are combined until a homogeneous mixture is obtained.

The components of the mixture of the invention can be combined in any order. In an embodiment, all the components of the composition are combined and mixed together. In another particular embodiment, the components of the mixture suitable as artificial soil except from water are first combined and mixed, then water is added and the resulting combination is mixed again after the addition of water.

In a preferred embodiment prior to mixing of the components, the waste sludge material, obtained preferably from wet machining of stone or ceramic material, is dried. Preferably, air dried or dried at a temperature between 15°C and 60°C. In another preferred embodiment, it is dried until its overall humidity is lower than 40% by weight, preferably lower than 30% by weight. In another embodiment, it is dried until its humidity is approximately 20%, preferably between 15 and 25%, more preferably between 18 and 22%.

In another aspect, the invention is directed to an artificial soil obtainable by the method of the invention. Preferably, the invention is directed to an artificial soil obtainable by the method of the invention having the features described above for the mixture suitable as artificial soil of the first aspect.

### Use of the mixture of the invention as artificial soil

Technosols or artificial soils may include components from wastes originating in landfills, sludge, cinders, mine spoils and ashes. However, these technosols are frequently toxic to the environment and require expensive treatments prior to their disposal.

The mixture of the invention, on the other hand, when used as artificial soil provides a second-life and useful use to wastes generated in the machining of stone or ceramic materials. Also, it might incorporate waste or scraps from rejects and trimming to size of the same stone and ceramic materials, as well as waste from intensive agricultural activities. As shown in the Examples of the present disclosure, the use of the mixture as an artificial soil gives an environmentally attractive solution to significant amounts of wastes while still providing a substrate for the restoration of degraded ground areas and for the growth of life, particularly plant life.

In this way, a third aspect of this invention relates to the use of the mixture of the invention in the rehabilitation of landfills, natural or artificial parks, mines, pits and agricultural fields.

In a particular embodiment, the invention concerns the use of the mixture of the invention as artificial soil, which is fertile, non-toxic, and not polluting, as a substrate for plant growth.

### Use of sludge in a mixture suitable as artificial fertile soil

In a further aspect, the invention relates to the use of sludge from stone or ceramic processing, in a mixture suitable as artificial fertile soil, preferably for restoring degraded natural areas. Preferably, the sludge is used in the mixture in an amount (dry weight) of at least 30 % w/w, more preferably at least 40 % w/w, and at most 90 % w/w of the dry weight of the mixture. More preferably, the mixture using the sludge also comprises gravel of particles with an average particle size between 1 and 70 mm, organic matter and optionally a cation exchanger.

Particular and preferred embodiments for the mixture suitable as artificial soil, for the sludge, for the gravel, for the organic matter and for the cation exchanger are as defined above.

### EXAMPLES

The present invention will now be described by way of examples which serve to illustrate the construction and testing of illustrative embodiments. However, it is understood that the present invention is not limited in any way to the examples below.

### Materials

Sludge waste from wet mechanizing Silestone® slabs of different colours/compositions. Construction rubble waste as gravel of particles with an average particle size between 1 and 70 mm.
Green-house plant compost waste as organic matter.
Bentonite as cation exchanger.
Urban quality tap water.

### Methods

Electrical conductivity was measured in decisiemens per meter (dS/m) from aqueous extracts 1:5 (v/v) using a Basic 30 conductivity meter (Crison Instruments, SA) according to standardized known protocols.

pH values were measured from aqueous mixtures 1:2.5 (v/v) using a pH-meter (Crison Instruments, SA) according to standardized known protocols.

Total Organic Carbon (TOC) was determined according to the method of Nelson and Sommers (Nelson, D.W. and Sommers, L.E. (1996) Total carbon, organic carbon, and organic matter. In Sparks, D.L., et al., Eds., Methods of Soil Analysis. Part 3, SSSA Book Series, Madison, 961-1010).

Elemental analysis values were obtained by means of fluorescence X-ray technique using an X-ray Bruker Pioneer apparatus and the data analyzed by the Plus EVALUATION software (Bruker).

Humidity values were obtained from the weight difference between a sample before and after drying in an oven at 105 °C for 24 hours.

Particle size distribution (granulometry) was determined by Robinson's pipette method (Robinson's G.W., J. Agric. Sci., 12, 1922), based on the Stoke's law indicating the rate of sedimentation of particles (under the effect of gravity) depending on its size. This allows determining the textural class of the soil or the soil component, based on the sand-silt-clay triangle.

The diameter distribution of particles sizes larger than 50 µm is determined by sieving. Depending on the particle size, some will pass through the mesh, some will become retained. The weight corresponding to the retained particles is divided by the total weight and thus a weight ratio is obtained for said particle size. The same procedure is applied with sieves of decreasing pore size.

Apparent density values were determined from the weight of a sample dried 24 h at 105 °C contained in a defined volume.

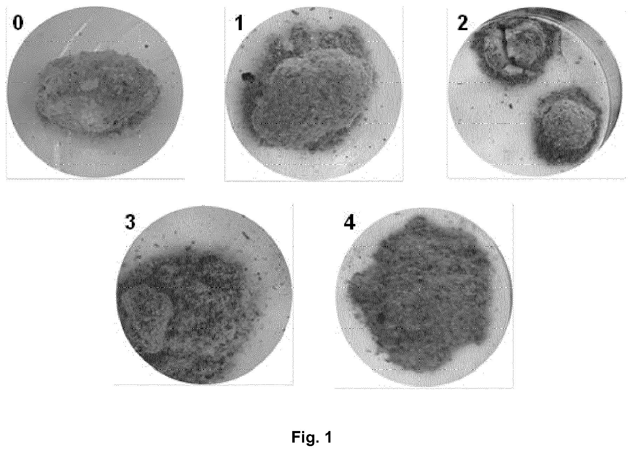

Aggregate stability was measured by the modified Emerson water dispersion test (A. Cerdà, Soil & Tillage Research, 2000 57:159-166) for immersed samples at 5 minutes, 2 hours and 24 hours. The aggregate behavior was classified in a scale from 0 (no dispersion) to 4 (total dispersion) upon visual inspection (see Figure 1) and averaged for at least 4 repetitions. The values follow a visual assessment with the following criteria (see Figure 1 for reference):
- Value 0: No dispersion, aggregate complete.
- Value 1: Dispersion of some particles around the aggregate.
- Value 2: Aggregate partially dispersed or divided in several smaller aggregates.
- Value 3: Important dispersion.
- Value 4: Full dispersion, the aggregate no longer exists.

Hydraulic conductivity, the ease with which water can move through pore spaces or fractures of the soil depends on the intrinsic permeability of the material and its degree of saturation. For samples 1-24, values were calculated from the difference of permeated water and added water, by adding 180 mL of distilled water to a 200 g dry sample and, 24 hours later, by adding 100 mL to the humid sample. For samples 25-36, the same experiment was conducted but the quantities were different. In this case, values were calculated from the difference of permeated water and added water, by adding 340 mL of distilled water to a 500 g dry sample and, 24 hours later, by adding 150 mL to the humid sample.

Atterberg limits of clays and silts, serve to evaluate the terrain cohesion and its humidity content. Two Atterberg limits were measured, the Liquid Limit (LL) being the water content at which the soil behavior transitions from that of a semi-liquid to that of a plastic solid and the Plastic Limit (PL) being the water content at which the soil behavior transitions from that of a semi-solid to a plastic solid. Atterberg defined the Plasticity Index (PI) as an indicator of how much water the soil particles in the specimen can absorb, and is calculated from the difference between the Liquid Limit and the Plastic Limit of the specimen (PI = LL - LP).

### Example 1. Characterization of individual components

**Table 1. Chemical analysis of each individual component.**

| | pH | Electrical conductivity (dS/m) | Total Organic Carbon (%) |
|---|---|---|---|
| Silestone® sludge waste | 6.4 | 0.7 | 0.6 |
| Rubble | 8.1 | 1.0 | - |
| Organic material Compost | 8.3 | 10.9 | 33.9 |
| Bentonite | 8.8 | 0.7 | 0.6 |

As shown in the table above, Silestone® sludge waste is slightly acidic whereas the other components are of basic character. The elemental analysis of this sludge resulted in 52% w/w of SiO₂, with other oxides such as Na₂O or CaO in lower concentrations (<3% w/w). Electrical conductivity and Total Organic Carbon values are high for the compost sample, as expected, which comes from the plant waste of green-house agriculture activities and comprises salts and organic matter.

The vegetable residue is composted. The construction rubble is a heterogeneous mixture of irregular fragments of several materials, such as wood, stone, bricks, cement, and others, with a minimum particle side of 2 cm.

**Table 2. Physical analysis of each individual component.**

| | Humidity (%) | Sand (%) | Silt (%) | Clay (%) | Apparent density (g/cm³) |
|---|---|---|---|---|---|
| Silestone® sludge waste | 31.1 | 15.7 | 72.1 | 12.2 | 0.8 |
| Rubble | - | - | - | - | 1.1 |
| Organic material compost | 38.9 | - | - | - | 0.3 |
| Bentonite | 8.2 | 32.2 | 13.1 | 52.9 | 0.9 |

### Example 2. Mixing of waste sludges from Silestone® with other materials (samples 1-12)

Prior to mixing, each individual component, i.e., the Silestone® sludge waste, rubble from construction sites, plant compost from green-houses and bentonite clay, was dried in an oven for 24 hours at 105 °C. This type of drying was selected for practical reasons for this example, although at larger scale, it would be preferred to conduct air drying of the sludges and the organic material.

Once dried, the components were weighted and mixed to achieve homogeneous compositions comprising the weight ratios expressed in Table 3.

**Table 3. Composition of each sample expressed as percentage weight ratio (w/w).**

| | Sample number | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Silestone® sludge waste | 60 | 60 | 60 | 60 | 50 | 50 | 50 | 50 | 40 | 40 | 40 | 40 |
| Rubble | 25 | 20 | 15 | 10 | 35 | 30 | 25 | 20 | 45 | 40 | 35 | 30 |
| Compost | 10 | 15 | 20 | 25 | 10 | 15 | 20 | 25 | 10 | 15 | 20 | 25 |
| Bentonite | 5 | 5 | 5 | 5 | 5 | 5 | 5 | 5 | 5 | 5 | 5 | 5 |
| Total | 100 | 100 | 100 | 100 | 100 | 100 | 100 | 100 | 100 | 100 | 100 | 100 |
| Water | 20 | 20 | 20 | 20 | 17.5 | 17.5 | 17.5 | 17.5 | 15 | 15 | 15 | 15 |

Once mixed, each sample was humidified by the addition of 20, 17.5 and 15 % of water depending on the amount of Silestone® sludge waste, 60%, 50% and 40%, respectively. In the table above, the addition of 20% water to sample 1 means that, if sample 1 weights 1 kg after mixing the dried components, 200 grams of water are added.

### Example 3. Characterization of the mixes, samples 1-12

### Chemical characterization

The pH values of the samples 1-12 of Example 2, shown in table 4, were found to be slightly basic.

**Table 4. Chemical analysis of the mixed components (samples 1 to 12).**

| Sample | pH | Electrical conductivity (dS/m) | Total Organic Carbon (%) |
|---|---|---|---|
| 1 | 9.1 | 3.6 | 3.8 |
| 2 | 8.9 | 4.8 | 5.5 |
| 3 | 9.0 | 5.0 | 7.1 |
| 4 | 8.7 | 4.7 | 8.8 |
| 5 | 9.1 | 3.3 | 3.7 |
| 6 | 8.7 | 5.8 | 5.4 |
| 7 | 8.6 | 5.6 | 7.1 |
| 8 | 8.9 | 5.0 | 8.8 |
| 9 | 8.9 | 4.5 | 3.6 |
| 10 | 8.7 | 4.7 | 5.3 |
| 11 | 8.6 | 5.4 | 7.0 |
| 12 | 8.5 | 7.4 | 8.7 |

The Total Organic Carbon fraction increases linearly with the increase of the compost fraction, as it was anticipated. However, although the main contributing component to the electrical conductivity values is the compost component, it was observed that, surprisingly, the electrical conductivity values of the mixed components do not increase in a linear trend with the increase in compost amount.

### Physical characterization

**Table 5. Texture class of the mixtures (samples 1 to 12).**

| Sample | Sand (%) | silt (%) | Clay (%) | Apparent density (g/cm³) |
|---|---|---|---|---|
| 1 | 21.3 | 60.7 | 18.0 | 0.96 |
| 2 | 22.0 | 60.4 | 17.6 | 0.90 |
| 3 | 27.9 | 54.5 | 17.6 | 0.84 |
| 4 | 23.9 | 54.5 | 21.6 | 0.90 |
| 5 | 23.2 | 59.1 | 17.8 | 0.98 |
| 6 | 26.7 | 56.1 | 17.2 | 0.94 |
| 7 | 26.1 | 55.5 | 18.4 | 0.95 |
| 8 | 26.5 | 54.6 | 18.9 | 0.83 |
| 9 | 26.3 | 57.6 | 16.1 | 0.93 |
| 10 | 28.4 | 52.1 | 19.5 | 0.93 |
| 11 | 28.4 | 54.8 | 16.8 | 0.94 |
| 12 | 29.2 | 52.4 | 18.4 | 0.78 |

The samples all display a silty-silt texture mainly due to the presence of the Silestone® sludge component. Although samples 1-12 only comprise 5% (w/w) of the component bentonite (clay), in the soil texture, there is a higher amount of clay-like component found in the mixed samples.

### Aggregate stability

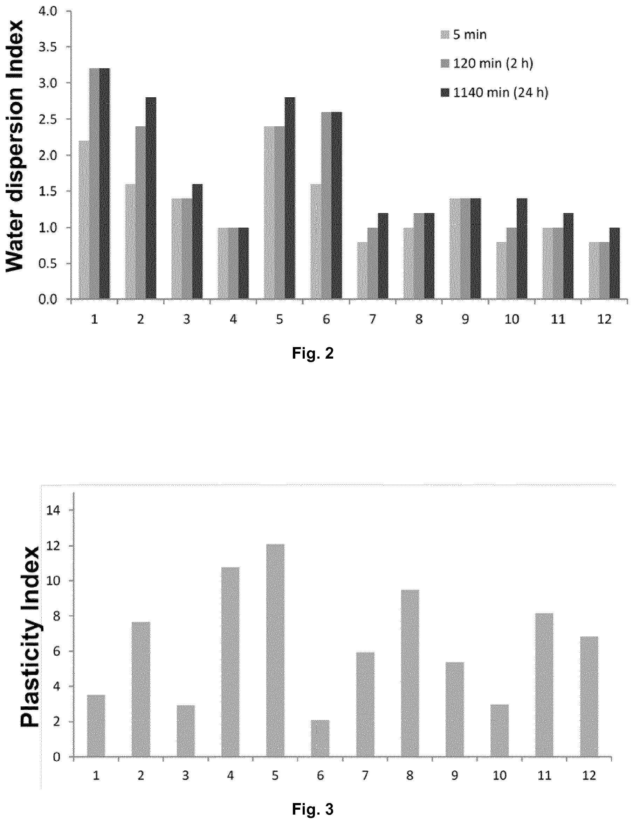

Using the modified Emerson's water dispersion test, the samples prepared in Example 2 were immersed in water and visually inspected at 5 minutes, 2 hours and 24 hours. Results showing the Water Dispersion Indexes are shown in Figure 2.

In general, the higher the amount of sludge and gravel, the smallest the stability of the aggregates. The samples with highest compost amounts were observed as being the ones with highest water stability. When the amount of the component Silestone® sludge waste is decreased, the water dispersion index also decreases (observable when comparing the results for sample 1, 5 and 9, for example). However, despite its high content in Silestone® sludge waste (60% w/w), sample 4 was surprisingly shown to be the sample with highest water stability (lowest aggregate dispersion in water). Probably, the detrimental effect of the relatively high sludge fraction in the dispersion stability is surpassed by the beneficial effect of the low relative amount of gravel and high relative amount of compost.

### Plasticity Index (PI)

Plasticity Index values for samples 1-12 (prepared according to Example 2) did not follow any evident trend as a function of the component ratios. Figure 3 shows the PI values for each of the 12 samples.

### Hydraulic conductivity

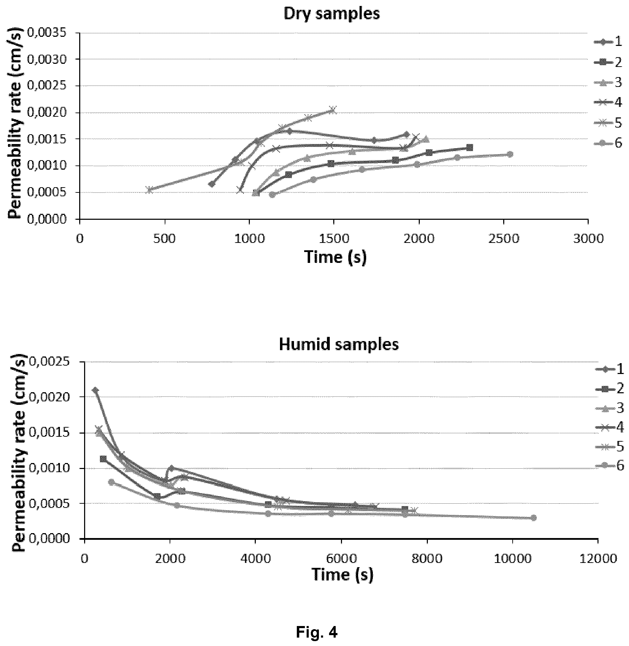

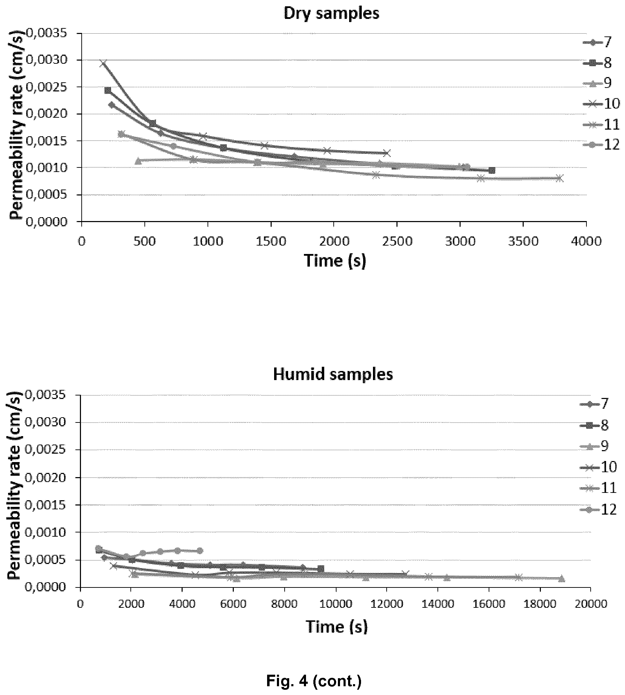

The permeability to water of samples 1-12 of Example 2 is shown in Figure 4 for dry samples and humid samples. The medium permeability of the dry samples is reduced to low permeability when the same samples are humid, as would be expected.

Low to medium values of permeability means that the technosol samples 1-12 will not have an excess of rain water drainage neither a high risk of pollution of aquifers with contaminants potentially included in the technosol. In addition, none of the tested samples have such a low permeability value that would hinder water from percolating (water passing through the soil).

These results show that the samples allow adequate draining with adequate water retention while avoiding risks of excess drainage.

### Example 4. Leachate composition of samples 13-24

Similar samples as the ones described above (samples 1 to 12) were prepared but on a larger scale, so that samples of 15 L in respective separared containers were obtained (samples 13 to 24, respectively).

Three plant varieties were seeded in each container (i.e., in each sample), the plants being two types of *Macrochloa tenacissima* (also known as *Stipa tenacissima*) and one type of *Ephedra fragilis.* The initial irrigation was of 2 L of water to each of the samples and the leachates were collected. The samples were irrigated with 2 L of water every two weeks, and the corresponding leachates collected.

The leachate elemental analysis after the first irrigation was determined by X-ray fluorescence as described above in Methods and the results summarized in Table 6.

**Table 6. Leachate elemental analysis for samples 13-24.**

| Concentration (g/L) | | | | | | | | | | | | |
|---|---|---|---|---|---|---|---|---|---|---|---|---|
| Sample | 13 | 14 | 15 | 16 | 17 | 18 | 19 | 20 | 21 | 22 | 23 | 24 |
| Na | 3.6 | 3.8 | 3.3 | 3.4 | 2.8 | 2.3 | 2.0 | 2.6 | 3.1 | 1.5 | 2.2 | 2.8 |
| Mg | 0.8 | 1.0 | 1.0 | 1.0 | 0.8 | 0.6 | 0.7 | 8.2 | 0.6 | 0.5 | 0.8 | 1.0 |
| Al | 0.0 | 0.0 | 0.0 | 0.0 | 0.0 | 0.0 | 0.0 | 0.0015 | 0.0 | 0.0 | 0.0 | 0.0 |
| P | 4.9 | 0.5 | 5.5 | 0.6 | 0.5 | 5.4 | 0.5 | 0.6 | 0.5 | 5.4 | 0.6 | 0.6 |
| S | 1.5 | 0.2 | 1.7 | 1.9 | 1.4 | 1.1 | 1.1 | 1.4 | 0.9 | 0.8 | 1.2 | 1.6 |
| Cl | 8.7 | 11.3 | 10.9 | 12.2 | 9.5 | 7.9 | 7.6 | 9.8 | 5.3 | 5.2 | 8.6 | 11.4 |
| K | 5.0 | 7.4 | 7.6 | 8.8 | 6.3 | 5.2 | 5.2 | 6.9 | 3.0 | 3.5 | 6.0 | 8.3 |
| Ca | 1.1 | 1.2 | 1.1 | 1.2 | 1.0 | 0.8 | 0.8 | 9.5 | 0.7 | 0.6 | 0.9 | 1.3 |

| Concentration (mg/L) | | | | | | | | | | | | |
|---|---|---|---|---|---|---|---|---|---|---|---|---|
| Sample | 13 | 14 | 15 | 16 | 17 | 18 | 19 | 20 | 21 | 22 | 23 | 24 |
| Zn | 0 | 0 | 12 | 0 | 0 | 14 | 0 | 7.7 | 0 | 0 | 9.1 | 10 |
| Ga | 0 | 21 | 0 | 0 | 0 | 6.6 | 0 | 0 | 7.6 | 12 | 7.4 | 8.6 |
| As | 0 | 0 | 0 | 0 | 0 | 0 | 0 | 0 | 0 | 0 | 33 | 0 |
| Ge | 0 | 0 | 9.1 | 0 | 0 | 0 | 6.6 | 6.8 | 9.7 | 0 | 0 | 0 |
| Ni | 2.2 | 0 | 0 | 0 | 10 | 0 | 0 | 0 | 0 | 0 | 0 | 0 |
| Br | 58 | 67.5 | 75.1 | 91.4 | 73.4 | 54.7 | 54.6 | 70.9 | 37.9 | 37.7 | 70.5 | 82.1 |
| Rb | 0 | 5.7 | 8.2 | 0 | 0 | 6.9 | 0 | 0 | 6.9 | 0 | 6.5 | 4 |
| Y | 0 | 0 | 0 | 8.1 | 8.5 | 4.6 | 0 | 0 | 0 | 0 | 0 | 0 |
| Sr | 15.4 | 13 | 16.3 | 18.9 | 14 | 12 | 13 | 12 | 0 | 0 | 13 | 4 |
| Zr | 0 | 0 | 4.5 | 2.9 | 7.9 | 0 | 0 | 7.5 | 7.1 | 6 | 8.9 | 0 |

Values of the table 6 above show that even for the first leachate, the concentration of the cations is well below plant life tolerability. For example, the recommended maximum concentration for aluminum in irrigation waters is 5 mg/L and sample 20 was the only one in which aluminum was found, but at a concentration of 1.5 mg/L. The recommended maximum concentration for bromine in irrigation waters is 200 mg/L where it was found that in the first leachate the concentration of Br is below 92 mg/L. The leachate pH and electrical conductivity values were also measured from leachates after the first irrigation at day 0, after 15 days (2 irrigations, 1 every two-weeks) and after 30 days (3 irrigations, 1 every two-weeks). The results are summarized in Table 7. Results show that the electrical conductivity of the leachates decreased to values commonly found in fertile soils after the first three irrigations of the samples.

Visual inspection of the plants after one month of seeding, revealed that they were showing normal growth behavior.

**Table 7. pH and electrical conductivity of the leachates from irrigating samples 13 to 24 at day 0, 15 and 30.**

| Sample | pH | | | Electrical conductivity (dS/m) | | |
|---|---|---|---|---|---|---|
| | Day 0 | Day 15 | Day 30 | Day 0 | Day 15 | Day 30 |
| 13 | 7.11 | 7.42 | 8.2 | 36.8 | 18.02 | 7.58 |
| 14 | 7.02 | 7.35 | 8.18 | 45 | 22.7 | 9.16 |
| 15 | 6.85 | 7.38 | 8.01 | 42.5 | 22.2 | 8.26 |
| 16 | 6.96 | 7.43 | 7.98 | 48.2 | 27.7 | 9.96 |
| 17 | 6.99 | 7.34 | 8.11 | 37.9 | 17.1 | 8.41 |
| 18 | 6.89 | 7.37 | 8.13 | 31.1 | 19.06 | 7.43 |
| 19 | 6.94 | 7.37 | 8.11 | 30.8 | 20.8 | 7.86 |
| 20 | 7.02 | 7.43 | 8.16 | 39.4 | 22.7 | 8.47 |
| 21 | 6.81 | 7.42 | 8.17 | 22.4 | 11.78 | 6.35 |
| 22 | 7 | 7.29 | 8.12 | 22.3 | 16.75 | 6.99 |
| 23 | 6.97 | 7.23 | 8.11 | 34.2 | 23.2 | 10.49 |
| 24 | 6.91 | 7.27 | 8.1 | 41.6 | 32.3 | 13.3 |

The examples show that the mixtures according to the invention can be used as technosol which shows similar behavior as natural fertile soil and that they can be used for restoration of degraded areas and as substrate for plant growth with no toxic leachate being produced upon irrigation. Sample 4 (similar to sample 16) showed the best results.

### Example 5. Mixing of agglomerate stone and ceramic waste machining sludges with other materials (samples (25-36))

In this Example, further mixtures according to the invention are described which comprise alternative components to the sludge and to the gravel component present in samples 1-24, as well as disclosing additional ranges of proportions of components.

### Materials

Sludge waste from wet mechanizing Silestone® and Dekton® slabs of different colors/compositions.

Gravel of particles from Silestone® rejects, obtained by grinding of Silestone® fragments until the average particle size is between 1 and 30 mm.

Green-house plant compost waste as organic matter.

Bentonite as cation exchanger.

Urban quality tap water.

### Preparation of the mixtures

Prior to mixing, the Silestone® sludge waste was air dried outdoors for 2 days until its humidity was approximately 20 wt.%. The Dekton sludge waste required more days of air drying, namely 10 days so that its humidity reached the 20 wt.% threshold.

The Silestone® gravel does not contain significant amounts of water.

The plant compost from green-houses and the bentonite clay were not dried prior to mixing, and were used having an average humidity of 39% in the case of the compost, and 8% in the case of the bentonite .

Once the sludges were partially dried, the components were weighted and mixed by hand in a tray to achieve homogeneous compositions comprising the dry weight ratios expressed in Table 8. Each sample was 2 L in volume.

**Table 8. Composition of the samples expressed as percentage weight ratio (w/w).**

| | Sample number | | | | | | | | | | | |
|---|---|---|---|---|---|---|---|---|---|---|---|---|
| | **25** | **26** | **27** | **28** | **29** | **30** | **31** | **32** | **33** | **34** | **35** | **36** |
| Silestone® sludge waste | 70 | 70 | 70 | 65 | 65 | 65 | 60 | 60 | 60 | 55 | 55 | 55 |
| Dekton® sludge waste | 2 | 7 | 12 | 2 | 7 | 12 | 2 | 7 | 12 | 2 | 7 | 12 |
| Silestone® gravel | 15 | 10 | 5 | 15 | 15 | 15 | 20 | 15 | 10 | 20 | 20 | 20 |
| Compost | 10 | 10 | 10 | 15 | 10 | 5 | 15 | 15 | 15 | 20 | 15 | 10 |
| Bentonite | 3 | 3 | 3 | 3 | 3 | 3 | 3 | 3 | 3 | 3 | 3 | 3 |
| Total | 100 | 100 | 100 | 100 | 100 | 100 | 100 | 100 | 100 | 100 | 100 | 100 |
| Water | 25 | 25 | 25 | 22.5 | 22.5 | 22.5 | 20 | 20 | 20 | 17.5 | 17.5 | 17.5 |

Once mixed, each sample was humidified by the addition of the additional amounts of water shown in table 8, depending on the amount of Silestone® sludge waste, in addition to the water already contained as humidity in the components. In the table above, the addition of 20% water to sample 25 means that, if sample 25 weight is 1 kg after mixing the humid components, 200 grams of water are additionally added. The water content of the mixtures 25-36 after mixing and adding water ranged from 30 wt.% to 40 wt.%. However, when the mixtures are left to rest to the open air, the water content slowly decreases to values ranging from 10-30 wt.%.

### Example 6. Characterization of the mixtures, samples 25-36

### Chemical characterization

The pH values of the samples 25-36 of Example 5, shown in table 9, were found to be more basic than samples 1-24.

**Table 9. Chemical analysis of the mixed components (samples 25 to 36).**

| Sample | pH | Electrical conductivity (dS/m) | Total Organic Carbon (%) |
|---|---|---|---|
| 25 | 9.4 | 1.9 | 4.8 |
| 26 | 9.5 | 1.7 | 3.5 |
| 27 | 9.7 | 1.2 | 3.7 |
| 28 | 9.3 | 1.7 | 3.0 |
| 29 | 9.3 | 1.8 | 4.5 |
| 30 | 9.2 | 1.7 | 4.0 |
| 31 | 9.4 | 2.2 | 5.6 |
| 32 | 9.5 | 1.8 | 3.6 |
| 33 | 9.4 | 2.5 | 3.8 |
| 34 | 9.5 | 2.2 | 6.0 |
| 35 | 9.2 | 2.8 | 6.7 |
| 36 | 9.3 | 2.3 | 3.5 |

Very favorably, the measured electrical conductivity and TOC values of the representative samples 25-36 are within the values characteristic of high-nutrient soils. Comparing with samples 1-14, the Total Organic Carbon fraction of samples 25-36 surprisingly no longer increases linearly with the increase of the compost fraction. In addition, although the main contributing component to the electrical conductivity values is the compost component, it was also observed that, again unexpectedly, the electrical conductivity values of the mixed components do not increase in a linear fashion with the increased in compost amount.

### Physical characterization

**Table 11. Physical analysis of the mixed components (samples 25 to 36).**

| Sample | Sand (%) | Silt (%) | Clay (%) | Apparent density (g/cm³) |
|---|---|---|---|---|
| 25 | 21.8 | 63.8 | 14.3 | 0.79 |
| 26 | 24.2 | 62.7 | 13.1 | 0.75 |
| 27 | 20.0 | 66.5 | 13.6 | 0.85 |
| 28 | 23.2 | 63.8 | 13.0 | 0.83 |
| 29 | 22.4 | 66.9 | 10.6 | 0.85 |
| 30 | 15.8 | 70.4 | 13.8 | 0.75 |
| 31 | 23.1 | 61.2 | 15.7 | 0.74 |
| 32 | 24.5 | 60.0 | 15.6 | 0.80 |
| 33 | 20.5 | 60.0 | 19.5 | 0.88 |
| 34 | 21.3 | 65.3 | 13.4 | 0.77 |
| 35 | 21.9 | 65.9 | 12.3 | 0.72 |
| 36 | 23.7 | 59.8 | 16.5 | 0.72 |

The samples all display a silty-loam texture. Although samples 25-36 only comprise 3% (w/w) of the component bentonite (clay), there is a higher amount of the clay textural component of the soil mixtures prepared. This type of soil texture affords good properties to the soil for the growth of vegetation, since it retains water and nutrients for longer time.

### Particle diameter distribution

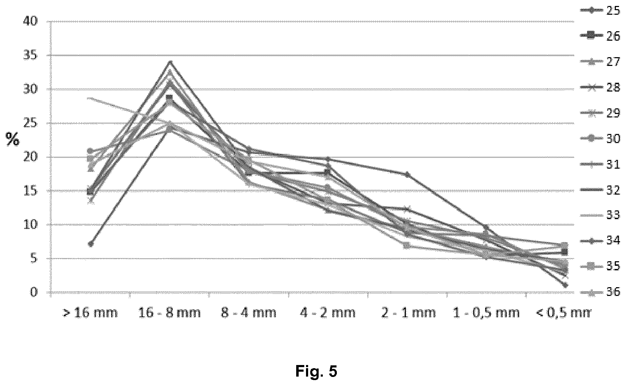

The diameter distribution of particles in the mixtures with sizes larger than 50 µm was determined by sieving, and the results are shown in Figure 5.

The size distribution of the particles is remarkably similar between the different mixture samples, and the dominant particle size (by weight) is from 8 to 16 mm. The particles within this diameter range were identified as being mostly from the Silestone® gravel component, which will act advantageously in improving the aeration and percolation properties of the technosol using the mixtures.

### Hydraulic conductivity

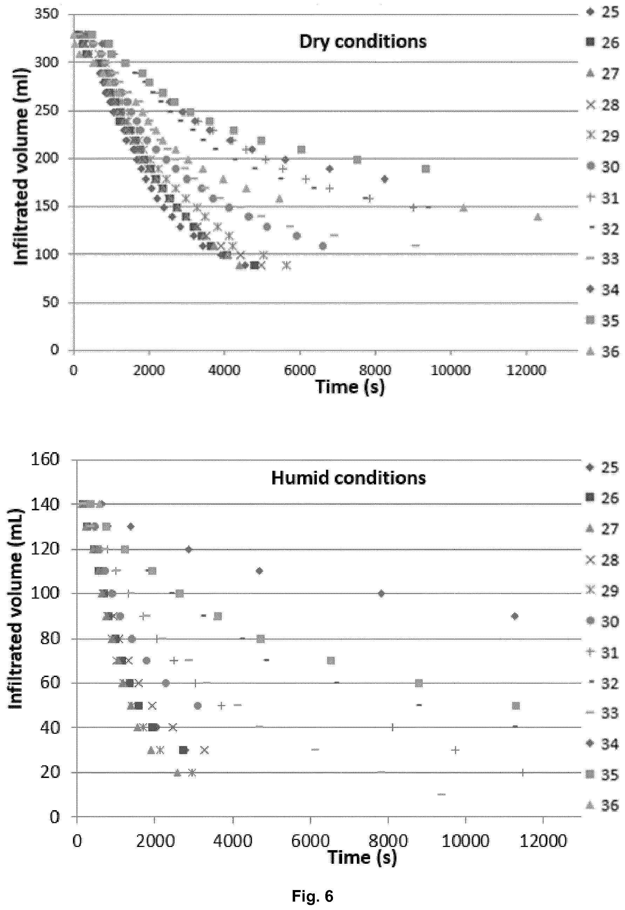

The samples were submitted to a hydraulic conductivity test as described above in methods. The results are shown in Figures 6a and 6b where it is seen that the permeability of the mixture samples is highly dependent on the proportion of each component. This effect is more noticeable for humid samples.

A 20% content of Silestone® gravel seems to slow the water percolation especially under humid conditions (samples 31, 34-36). This is a surprising finding since the results go against what would be expected, (this is, that the conductivity would increase with the amount of gravel) considering the size of the particles of the Silestone gravel fraction.

### Leachate characterization of samples 25-36

The hydraulic conductivity assay was followed by collection of the corresponding leachates. The leachate pH and electrical conductivity were measured from the leachates and the results summarized in Table 11.

**Table 11. Chemical analysis of the leachates from samples 25 to 36.**

| Sample | pH | Electrical conductivity (dS/m) |
|---|---|---|
| 25 | 7.3 | 4.07 |
| 26 | 7.1 | 3.37 |
| 27 | 7.6 | 2.29 |
| 28 | 7.7 | 3.84 |
| 29 | 7.1 | 3.40 |
| 30 | 7.5 | 3.49 |
| 31 | 7.7 | 5.38 |
| 32 | 7.9 | 4.82 |
| 33 | 7.8 | 3.44 |
| 34 | 8.3 | 6.98 |
| 35 | 7.6 | 6.20 |
| 36 | 7.8 | 5.35 |

The pH values decreased when comparing to the pH measured from the mixture samples directly, as expected from the dilution of the irrigation water. The electrical conductivity values obtained for all samples are compatible values with the growth of plant life.

### Example 7. Behavior under simulated rain

Representative samples 25, 29 and 33 comprising different ratios of Silestone® sludge waste materials (70, 65 and 60% w/w, respectively) and Dekton® sludge waste materials (2, 7 and 12% w/w, respectively) were submitted to a simulated rain test. The purpose of this test was to evaluate the behavior of these representative mixture samples as technosols in terms of their erosion resistance capabilities.

The rain simulator consisted of a water nozzle placed 6 meters above ground, sprinkling water at a rate of 40 mm/h. At this height, the kinetic energy of the water droplets comes close to that of real rain drops.

Samples 25, 29 and 33 were placed in 20x80x20 cm metallic trays and submitted to the simulated rain test for 1 hour. The rain water surface runoff was collected, its volume measured and, once filtered, the amount of sediments is weighted.

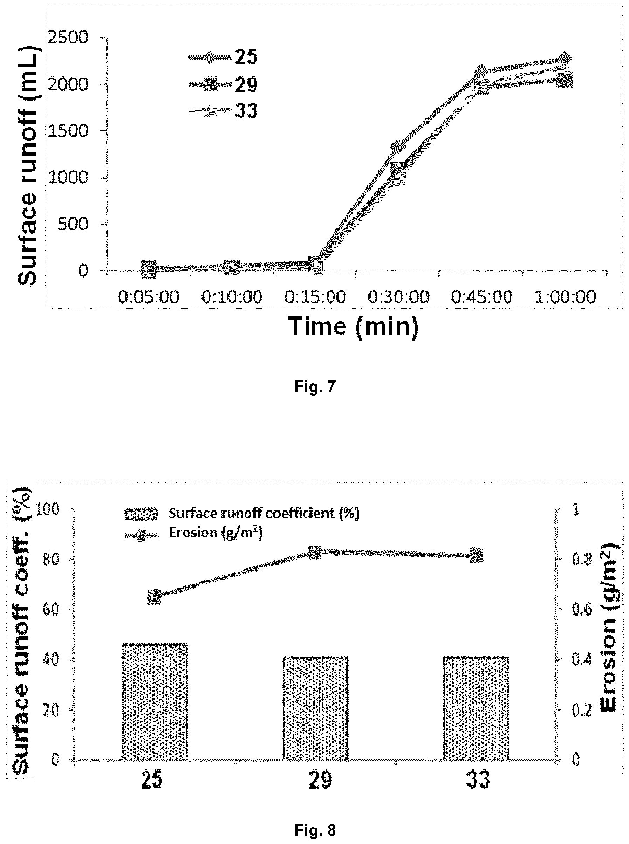

Figure 7 shows the volume of run-off water as function of time. Figure 8 shows the surface runoff coefficient, as the ration between the surface runoff water collected and the water delivered by the nozzle, and the amount of sediments produced (which corresponds to the erosion of the technosol under rain).

Results show surface runoff coefficients within 40 to 50% and sediment production between 0.7 and 0.8 g/m². These values indicate that the technosol of the invention has a low to negligible risk of excessive erosion.

### Example 8. Toxicity bioassay

The presence of toxic elements may hinder the sprout and growth of seeds, especially during the first days. In addition, the cell division of the root apexes can be affected; delaying the process of mitosis or altering the root lengthening process. The inhibition of these phenomena is thus a good indicator of the phytotoxicity of a certain soil, or as in the present example, a certain mixture sample.

Two plants were used for the bioassay, wheat (*Triticum aestivum*) and corn (Zea *mays*). Before performing the toxicity bioassays, the viability of the seeds was determined by using triphenyltetrazolium chloride. The water-based 2,3,5-triphenyltetrazolium chloride (TTC) partitioning method using n-hexane for the evaluation of green plant tissue viability involves the reduction of TTC to insoluble red-coloured triphenylformazan (TPF) by the action of seed dehydrogenase enzymes, particularly such enzymes of malic acid, when there is respiratory activity, allowing to detect viable seed, bud, leaf and cultured cell by the appearance of the red color tincture when such enzymes are active (Lin CH et al, Phytochem. Anal., 2001, 12(3):211-3; Russi, D., Bartosik, R., Rodriguez, J. Peretti, A. 2007. Adaptación del test de tetrazolio para la detección rápida de daño en la calidad del trigo por altas temperaturas durante el secado. IX Congreso Argentino de Ingenieria Rural y I del MERCOSUR. Argentina).

Fifty, randomly selected, seeds of the two plant species were cut in half and placed in a Petri dish with TTC. After 24 hours, those seeds which embryo had a red color tincture were considered as viable and selected for the test.

After confirming the viability of the seeds, an experimental design was established to study the toxicity of the soil mixture samples. The representative mixture samples 25-36 were installed in pots, with 10 wheat seeds and 10 corn seeds each. In addition, 3 replications were made for each of the 12 samples. The pots were watered twice a week.

The amount of seeds that germinated in each pot after the first 4 weeks was evaluated. Periodic reviews were also made to determine whether the growth of the seeds had any alteration caused by a possible toxicity of the substrate.

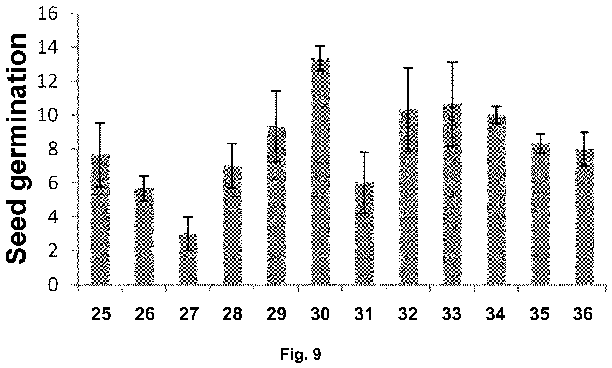

As shown in figure 9, seeds germinated in all pots, indicating that in all cases, the mixtures were fertile. There was a noticeable variation in the number of seeds germinated depending on the mixture sample, however. The results did not follow any recognizable trend regarding the ratios of the different mixture components, and it is assumed that the differences might be due to other factors, such as the different viability of the seeds. The treatment with the highest success in germination of seeds is number 30, where the total sludge content (from Silestone® and Dekton®) reaches 77% w/w. Despite the large variation in component concentration among the mixtures, they all were shown to be fertile substrates as artificial soils, and systematic toxicity which would inhibit fully germination or development of vegetation can be discarded.

## Claims

1. A mixture suitable as artificial soil, **characterized in that** it comprises:
a) sludge resulting from stone or ceramic material processing;
b) gravel of particles with an average particle size between 1 and 70 mm;
c) organic matter; and
d) optionally, a cation exchanger.

2. The mixture according to claim 1, wherein the stone or ceramic material is selected from the group consisting of natural stone, artificial stone, ceramic materials, porcelain, stoneware, and combinations thereof.

3. The mixture according to any one of claims 1 or 2, wherein the dry weight of the sludge a) is at least 30% w/w of the sum of the dry weight of each component a), b), c) and d).

4. The mixture according to any one of claims 1 to 3, wherein the dry weight of the sludge a) ranges from 40-85% w/w of the sum of the dry weight of each component a), b), c) and d).

5. The mixture according to any one of claims 1 to 4, wherein the dry weight of the gravel b) ranges from 5-45% w/w of the sum of the dry weight of each component a), b), c) and d).

6. The mixture according to any one of claims 1 to 5, wherein the dry weight of the organic matter c) ranges from 2-45% w/w of the sum of the dry weight of each component a), b), c) and d).

7. The mixture according to any one of claims 1 to 6, wherein the dry weight of the optional cation exchanger ranges from 0.5-10% w/w of the sum of the dry weight of each component a), b), c) and d).

8. The mixture according to any one of claims 1 to 7, wherein the elemental chemical composition of the dry content of the sludge a) comprises at least 40% of SiO₂.

9. The mixture according to any one of claims 1 to 8, wherein the sludge a) has an average particle size smaller than 1 mm.

10. The mixture according to any one of claims 1 to 9, wherein the gravel b) is of particles of natural stone, artificial stone, and/or ceramic, preferably from rejects or scraps from the manufacture of stone or ceramic materials.

11. The mixture according to any one of claims 1 to 10, wherein the organic matter c) is selected from plant, fruit or vegetal waste, preferably from compost plant, fruit or vegetal waste.

12. The mixture according to any one of claims 1 to 11, wherein the cation exchanger is clay, preferably selected from smectite minerals, preferably bentonite.

13. Method for preparing a mixture suitable as artificial soil according to any one of claims 1 to 12, **characterized in that** it comprises:
- combining the following substances until obtaining a mixture:
a) sludge resulting from stone or ceramic material processing;
b) gravel of particles with an average particle size between 1 and 70 mm;
c) organic matter,
d) optionally, a cation exchanger, and
e) optionally water.

14. Use of the mixture of any of the claims 1-12 as an artificial soil, in particular for the rehabilitation of landfills, natural or artificial parks, mines, pits, agricultural fields and as substrate for plant growth.

15. Use of sludge resulting from stone or ceramic material processing in a mixture suitable as artificial fertile soil.
